# EUROPEAN PATENT APPLICATION

(11) **EP 3 419 236 A1**
(43) Date of publication of application: **26.12.2018**
(21) Application number: 17177609.9
(22) Date of filing: 23.06.2017
(51) Int. Cl.: H04L 27/34, H04L 27/26, H04L 27/18, H04L 25/03

(54) **DATA TRANMISSION AND RECEPTION USING PILOT SUBCARRIERS**

(71) Applicant: Fraunhofer-Gesellschaft zur Förderung der angewandten Forschung e.V., 80686 München (DE)
(72) Inventor: DATTA, Rohit, 91058 Erlangen (DE)
(74) Representative: Zimmermann, Tankred Klaus

(57) **Abstract**

A transmitter configured to transmit a transmit signal, wherein the transmit signal comprises a plurality of subcarriers, wherein the transmitter is configured to filter a subcarrier of the plurality of subcarriers with a pulse shaping filter, wherein the transmitter is configured to transmit, on a first pilot subcarrier of the plurality of subcarriers of the transmit signal, a training sequence for an intercarrier interference cancellation at a receiver, wherein the transmitter is configured to transmit, on a second pilot subcarrier of the plurality of subcarriers of the transmit signal, payload data using a first modulation order for an intercarrier interference cancellation at the receiver, wherein the transmitter is configured to transmit, on one or more of the remaining subcarriers of the plurality of subcarriers, payload data using a second modulation order, and wherein the first modulation order is lower than the second modulation order.

## Description

Embodiments of the present invention relate to transmitters and receivers using pilot subcarriers for payload data transmission.

### Background of the Invention

In today's wireless communication systems, transmitters and receivers are preferably synchronized. A typical OFDM receiver should know the exact timing of the beginning of each symbol within the data frame. Nowadays a hot topic of research is non-orthogonal waveforms like Filter Bank Multi Carrier (FBMC), Generalized Frequency Division Multiplexing (GFDM), Universal Filtered Multi Carrier (UFMC), etc. This document describes a new idea of synchronization of non-orthogonal waveforms which have different time-frequency localization modeling than typical OFDM.

Therefore, a desire exists for an improved concept which provides, e.g. a higher spectral efficiency.

### Summary of the Invention

Embodiments provide for a transmitter configured to transmit a transmit signal, wherein the transmit signal comprises a plurality of subcarriers. Moreover, the transmitter is configured to filter a subcarrier of the plurality of subcarriers with a pulse shaping filter and to transmit, on a first pilot subcarrier of the plurality of subcarriers of the transmit signal, a training sequence for an intercarrier interference cancellation at a receiver. Further, the transmitter is configured to transmit, on a second pilot subcarrier of the plurality of subcarriers of the transmit signal, payload data using a first modulation order for an intercarrier interference cancellation at the receiver. Furthermore, the transmitter is configured to transmit, on one or more of the remaining subcarriers of the plurality of subcarriers, payload data using a second modulation order, wherein the first modulation order is lower than the second modulation order.

The described embodiment is based on the idea, that to obtain a transmission with higher efficiency dedicated pilot subcarriers of a transmission scheme do not all need to send known training sequences. Thereby, it enables the possibility to transmit data using some pilot subcarriers which would otherwise be wasted for training sequences. In turn, by using some pilot subcarriers for payload data, spectral efficiency of a transmission can be increased, when compared to transmissions, where the pilot subcarriers only carry known training sequences which do not carry payload data. Moreover, the pulse shaping filters can be used to obtain transmission techniques like generalized frequency division multiplexing (GFDM), filter bank multi carrier (FBMC) or universal filtered multi carrier (UFMC), which offer more flexibility than common orthogonal frequency division multiplexing (OFDM) used in long-term evolution (LTE). Moreover, the transmission schemes obtained by using the pulse shaping filters allow to achieve non-orthogonal waveforms, which may provide a better peak-to-average power ration than OFDM.

In embodiments, the first pilot subcarrier may remain unfiltered by the pulse shaping filter. The described embodiment may be useful to obtain backward compatibility with systems like LTE. In other words, the unfiltered pilot subcarrier can also be received with common LTE handsets and used, e.g. for frequency synchronization.

In embodiments, the transmitter may be configured to modulate the payload data onto the second pilot subcarrier using a modulation order smaller than 5. Using a small modulation order, e.g. 5 leads in general to a symbol alphabet with 32 symbol (2 to the power of 5), e.g. 32-QAM. A low modulation order increases the probability of decoding the symbols correctly, as smaller constellation like 32-QAM offer substantial distance between the individual symbols, reducing the probability of wrongly demapping/decoding at a receiver.

In embodiments, the transmitter may be configured to modulate the payload data onto the second pilot subcarrier using a Binary Phase Shift Keying (BPSK), a Quadrature Phase Shift Keying (QPSK) or a 4-Quadrature Amplitude Modulation (4-QAM). Using the mentioned modulations, allows for a receiver to reliably receive a payload transmitted on the second pilot subcarrier. Additionally, the received payload can be used for frequency synchronization of a receiver.

In embodiments, the transmitter may be configured to modulate the payload data onto the one or more remaining subcarriers using a modulation order greater than 5. Using a higher modulation order, e.g. 32-QAM, 64-QAM, 128-QAM, 256-QAM, 512-QAM or equivalent PSK modulations, allows for transmissions with a high data rate using the one or more remaining subcarriers.

In embodiments, the transmitter may be configured to modulate the payload data onto the one or more remaining subcarriers using a higher modulation order, for example, a 256-Quadrature Amplitude Modulation (256-QAM). Thereby, transmission with a high data rate can be achieved on the one or more remaining subcarriers, increasing spectral efficiency.

In embodiments, the transmitter may be configured to transmit the training sequence on the first pilot subcarrier, wherein the training sequence is based on a binary sequence known at the receiver. The binary sequence may have special correlation properties, which make it especially useful, e.g. for time and frequency synchronization.

In embodiments, the transmitter may be configured to transmit the training sequence on the first pilot subcarrier, the training sequence usable for a frequency synchronization of the receiver. A training sequence allows for easy and flexible determination of a frequency offset, which can be used to correct the frequency offset at the receiver.

In embodiments the transmitter may be configured to transmit payload data over the second pilot subcarrier, when a channel information is above a certain threshold. Alternatively, the transmitter may be configured to transmit information, known at the receiver, on the second pilot subcarrier, when the channel information is below a certain threshold, wherein the known information is usable by the receiver for at least one of a frequency synchronization and/or a channel estimation and /or a intercarrier interference cancellation. The described embodiment allows flexible usage of the second pilot subcarrier, or any other pilot subcarrier apart from the first pilot subcarrier, such that can be used for data transmission depending on channel quality. In other words, if a single pilot subcarrier transmitting a training sequence may not be sufficient for synchronization of a receiver, the embodiment may choose to use addition pilot subcarriers to allow for synchronization of the receiver. Alternatively, when the channel quality is good, the described embodiment increases the spectral efficiency by using pilot subcarriers apart from the first pilot subcarrier to transmit payload data.

In embodiments, the transmitter may be configured to transmit payload data on the second pilot subcarrier, the payload data usable for a frequency synchronization of the receiver. The embodiment may send the payload data with a sufficiently low modulation order, such that it may be reliably received by an receiver. In turn a receiver may use the received payload data for frequency synchronization, instead of using known test signals, commonly transmitted over the pilot subcarriers.

In embodiments, the transmitter may be configured to encode the payload data transmitted on the second pilot subcarrier and/or on the one or more remaining subcarriers, using channel coding. Using a channel coding makes the payload data robust to distortions in a channel. Thereby, a higher reliability of reception may be achieved, increasing the usefulness for, e.g. frequency synchronization or intercarrier interference cancellation.

In embodiments the transmitter may be configured, for using the channel coding, to encode the payload data, such that a redundancy is introduced, in order to allow for reception of the payload data over a noisy or lossy channel. Redundancy is beneficial when transmitting through a lossy channel, as information can be restored although, parts of a message may be lost.

In embodiments, the transmitter may be configured to use the first pilot subcarrier to transmit a training sequence in a first time frame, and wherein the transmitter is configured to use the second pilot subcarrier to transmit a training sequence in a second time frame, wherein the first time frame and the second time frame are different.

In embodiments the pilot subcarriers may be ordered in a time-frequency grid of the transmit signal, e.g. according to a reference signal grid of LTE-OFDM, wherein the transmitter is configured to sparsely populate the pilot subcarriers of the transmit signal, e.g. using only every second subcarrier in every second time frame, such that individual transmit symbols on a subcarrier are sufficiently distanced in time, e.g. being distanced by a time frame or by a symbol period, such that the receiver may receive the symbols of the subcarrier substantially intersymbol interference free. Alternatively or additionally, the pilot subcarriers may be sparsely populated in frequency, such that the transmitter uses individual pilot subcarriers of the transmit signal sufficiently distanced in frequency, e.g. being one or two pilot subcarriers apart, such that the receiver may receive the individual pilot subcarriers substantially intercarrier interference free. The described embodiment allows for reliable reception of payload data transmitted using the pilot subcarriers, by substantially avoiding intercarrier interference and intersymbol interference. Moreover, a Downlink control signal may be designed flexibly to avoid unnecessary overhead. First, 1 to 3 time symbols may be used in each subframe. The control Region may be dynamically variable. In order to maintain backward compatibility with previous standards, The length may be indicated by a Physical Control Format Indicator Channel (PCFICH) in the first OFDM symbol of each subframe. 16-QPSK PCFICH can be used to make the transmission robust.

Embodiments provide for a receiver configured to receive a receive signal from a channel, wherein the receive signal comprises a plurality of subcarriers. Moreover, the receiver is configured to filter a subcarrier of the plurality of subcarriers with a pulse shaping filter. Further, the receiver is configured to receive, on a first pilot subcarrier of the plurality of subcarriers of the receive signal, a training sequence usable for intercarrier interference cancellation. Furthermore, the receiver is configured to receive, on a second pilot subcarrier of the plurality of subcarriers of the receive signal, payload data using a first modulation order usable for intercarrier interference cancellation. The receiver is further configured to receive, on one or more of the remaining subcarriers of the plurality of subcarriers, payload data using a second modulation order, wherein the first modulation order is lower than the second modulation order.

The described embodiment is based on the idea, that to obtain a transmission with higher efficiency dedicated pilot subcarriers of a transmission scheme do not all need to send known training sequences. Thereby, it enables the possibility to receive data using some pilot subcarriers which would otherwise be wasted for training sequences. In turn, by using some pilot subcarriers for payload data, spectral efficiency of a reception can be increased, when compared to receptions, where the pilot subcarriers only carry known training sequences which do not carry payload data. Moreover, the pulse shaping filters can be used to receive transmissions transmitted with techniques like generalized frequency division multiplexing (GFDM), filter bank multi carrier (FBMC) or universal filtered multi carrier (UFMC), which offer more flexibility than common orthogonal frequency division multiplexing (OFDM) used in long-term evolution (LTE). Moreover, the transmission schemes obtained by using the pulse shaping filters allow to achieve non-orthogonal waveforms, which may provide a better peak-to-average power ration than OFDM.

In embodiments, the receiver may be configured to obtain the payload data modulated on the second pilot subcarrier. Furthermore, the receiver may be configured to determine an interference estimate onto adjacent subcarriers based on the payload data obtained from the second pilot subcarrier. Moreover, the receiver may be configured to remove the interference onto adjacent subcarriers based on the obtained interference. The described embodiment can allow better reception quality intercarrier interference, to thereby enable a better reception of payload data of adjacent subcarriers. Moreover, successive interference cancellation can be performed by the embodiment, wherein through multiple iterations influence of neighboring subcarriers can be reduced.

In embodiments, the first pilot subcarrier may remain unfiltered by the pulse shaping filter. This allows for backward compatibility, i.e. coexisting operation of receivers as described here and common receivers.

In embodiments, the receiver may be configured to obtain the training sequence from the first pilot subcarrier, wherein the training sequence is a binary sequence known at the receiver. Further, the receiver may be configured to use the training sequence for at least one of a frequency synchronization, a channel estimation, and an interference cancellation. Using a known binary sequence allows for a simple frequency synchronization and/or channel estimation and/or interference cancellation, with little computational effort.

In embodiments, the receiver may be configured to obtain the payload data from the second pilot subcarrier, wherein the receiver is configured to us the payload data for at least one of a frequency synchronization, a channel estimation and an intercarrier interference cancellation. Using payload data for frequency synchronization and/or channel estimation and/or intercarrier interference cancellation may increase spectral efficiency, compared to concepts using data, known at the receiver, for frequency synchronization and/or channel estimation and/or intercarrier interference cancellation.

In embodiments, the receiver may be configured to obtain known information from the second pilot subcarrier, wherein the receiver is configured to use the known information for at least one of a frequency synchronization, a channel estimation and an intercarrier interference cancellation. The embodiments allows to flexibly receive payload data or known information, wherein the known information may be usable for frequency synchronization and/or channel estimation and/or intercarrier interference cancellation. Therefore, the described concept allows to increase spectral efficiency when necessary and/or ensure reliability through usage of known information.

In embodiments, the receiver may be configured to decode the payload data, obtained from the second pilot subcarrier and/or from the one or more remaining subcarriers, using channel coding. By using a channel coding(decoding) a more reliable reception can be achieved, e.g. through the introduction of redundancy in a transmitter and removal of the redundancy, useful for reception, at the receiver.

In embodiments, the receiver may be configured to estimate a first error information based on a reception of the training sequence from the first pilot subcarrier. Moreover, the receiver may be configured to estimate a second error information based on the second pilot subcarrier using the first error information. Further, the receiver may be configured to estimate the payload data at the receiver using the first error information and/or the second error information. The described embodiment can, e.g. first perform a frequency synchronization and an interference cancellation based on the received training sequence, based on the first error information. Moreover, the embodiment can receive the payload data from the second pilot subcarrier using the first error information and the second error information. Further, the embodiment may perform a reception of the remaining subcarriers, using the first error information and/or the second error information.

Embodiments provide for a communication system comprising a transmitter, configured to transmit a transmit signal into a channel and a receiver, configured to receive a receive signal based on the transmit signal from the channel. The transmitter and the receiver can be one of the embodiments described herein. Moreover, the described system allows for a concept of high spectral efficiency, as pilot carriers might be used for transmission of payload.

Embodiments provide for a method for transmitting a transmit signal comprising a plurality of subcarriers. The methods comprises filtering a subcarrier with a pulse shaping filter and transmitting, on a first pilot subcarrier of the transmit signal, a training sequence for intercarrier interference cancellation at a receiver. Moreover, the methods comprises transmitting, on a second pilot subcarrier of the transmit signal, payload data using a first modulation order for intercarrier interference cancellation at the receiver and transmitting, on one or more of the remaining subcarriers, payload data using a second modulation order, wherein the first modulation order is lower than the second modulation order.

Embodiments provide for a method for receiving a receive signal comprising a plurality of subcarriers, wherein the method comprises filtering a subcarrier with a pulse shaping filter and receiving, on a first pilot subcarrier of the receive signal, a training sequence usable for intercarrier interference cancellation. Further, the method comprises receiving, on a second pilot subcarrier of the receive signal, payload data using a first modulation order usable for intercarrier interference cancellation and receiving, on one or more of the remaining subcarriers, payload data using a second modulation order, wherein the first modulation order is lower than the second modulation order.

The described methods can be supplemented by any of the features or functionalities described herein with respect to apparatuses, either individually or in combination.

A further preferred embodiment of the invention is a computer program with a program code for performing one of the aforementioned methods when the computer program runs on a computer or a microcontroller.

### Brief Description of the Figures

In the following, embodiments of the present invention will be explained with reference to the accompanying drawings, in which:
- Fig. 1: shows a schematic flow chart of a transmitter, according to embodiments of the invention;
- Fig. 2: shows a schematic flow chart of a receiver, according to embodiments of the invention;
- Fig. 3: shows a schematic flow chart of a communication system, according to embodiments of the invention;
- Fig. 4A: shows a time-frequency grid of a conventional orthogonal frequency division multiplex concept;
- Fig. 4B: shows a time-frequency grid of a non-orthogonal frequency division multiplex concept, according to embodiments of the invention;
- Fig. 5: shows a time-frequency grid, according to embodiments of the invention;
- Fig. 6: shows a flow chart of a method according to embodiments of the invention;
- Fig. 7: shows a flow chart of a method according to embodiments of the invention.

### Detailed Description of the Embodiments

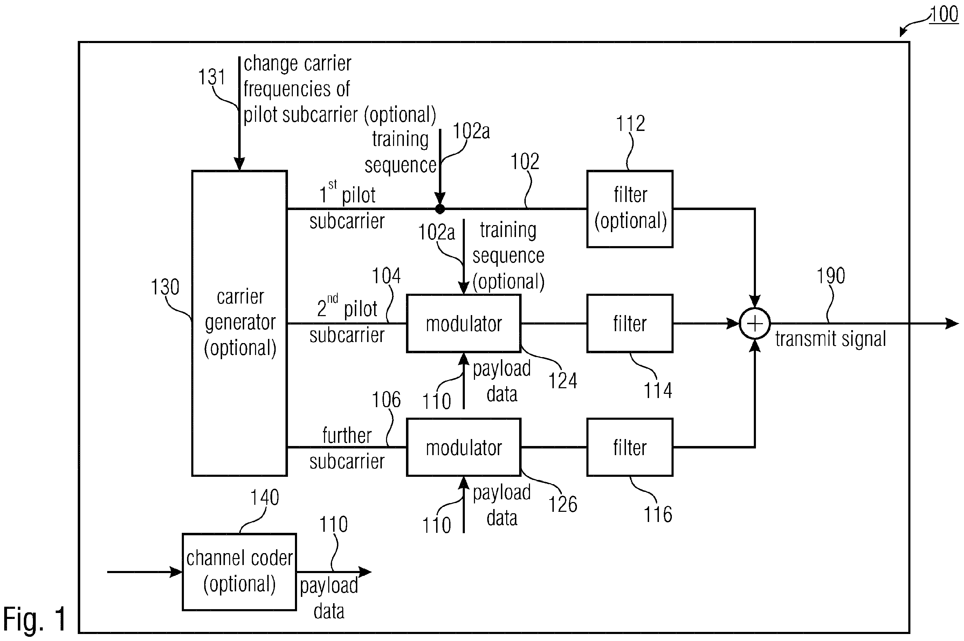

Fig. 1 shows a schematic flow chart of a transmitter 100, according to embodiments of the invention. The transmitter 100 is configured to transmit a transmit signal 190, wherein the transmit signal comprises a plurality of subcarriers 102, 104 and 106. The transmitter 100 is further, configured to filter a subcarrier of the plurality of subcarriers with a pulse shaping filter 112, 114, 116. The transmitter is configured to transmit, on a first pilot subcarrier 102 of the plurality of subcarriers of the transmit signal, a training sequence 102a for an intercarrier interference cancellation at a receiver. Moreover, the transmitter 100 is configured to transmit, on a second pilot subcarrier 104 of the plurality of subcarriers of the transmit signal 190, payload data 110 using a first modulation order for an intercarrier interference cancellation at the receiver, e.g. using modulator 124. Moreover, the transmitter 100 is configured to transmit, on one or more of the remaining subcarriers 106 of the plurality of subcarriers, payload data 11 using a second modulation order, e.g. using modulator 126. Further, the first modulation order is lower than the second modulation order.

The transmitter produces a transmit signal 190 based on a 1^{st} pilot subcarrier signal 102, which comprises a training sequence 102a. The transmit signal190 comprises further, a 2^{nd} pilot subcarrier signal 104 comprising payload data 110, or optionally a training sequence 102a. Furthermore, the transmit signal comprises further subcarriers, e.g. subcarrier 106, wherein the subcarrier 106 comprises payload data, modulated onto the subcarrier 106, e.g. using modulator 126. Moreover, the second pilot subcarrier 104 is filtered by pulse shaping filter 114 and the further subcarrier 106 is filtered with a pulse shaping filter 116. Further, the modulation order used by the modulator 124 is lower than the modulation order used by modulator 236. Moreover, the transmitter 106 may optionally comprise a carrier generator 130, e.g. a Discrete Fourier Transform (DFT) or an Inverse Discrete Fourier Transform.

In transmitter 100 the carrier generator is arranged before the modulation and filtering, in embodiments the arrangement can be changed, e.g. such that modulation and/or filter are performed in a baseband and the individual carriers are then upconverted to the desired subcarrier frequencies. Moreover, a further mixing might be applied to transmit signal 190 by a radio frequency, e.g. for wireless communication.

Furthermore, the transmitter 100 may optionally change times and frequencies which are used for pilot subcarrier transmission, e.g. using a change carrier frequencies of pilot subcarrier information 131. This allows the use of sparse pilot subcarrier usage, such that an interference to neighboring subcarriers is reduced.

Optionally, the transmitter 100 may use channel coding, e.g. using channel coder 140 to obtain the payload data, which is modulated onto the second pilot subcarrier 104 or the further subcarrier 106.

Moreover, apparatus 100 of Fig. 1 can be supplemented by any of the features and functionalities described herein, either individually or in combination.

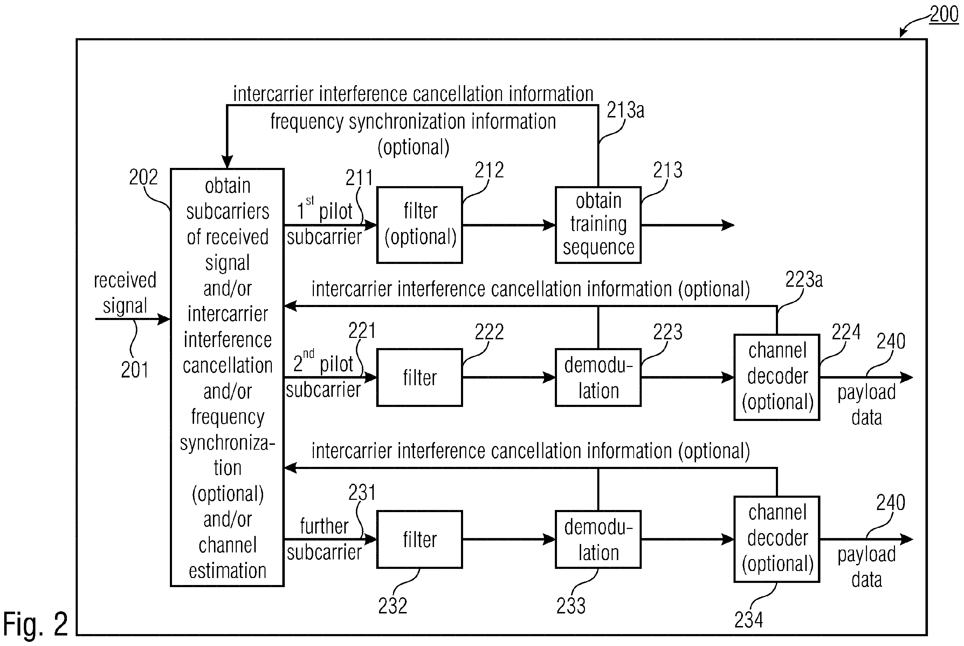

Fig. 2 shows a schematic flow chart of a receiver 200, according to embodiments of the invention. The receiver 200 is configured to receive a receive signal from a channel, wherein the receive signal comprises a plurality of subcarriers 211, 221, 231. The receiver 200 is configured to filter a subcarrier of the plurality of subcarriers with a pulse shaping filter, e.g. using filters 212, 222, 232 Moreover, the receiver 200 is configured to receive, on a first pilot subcarrier 211 of the plurality of subcarriers of the receive signal 201, a training sequence 215 usable for intercarrier interference cancellation, e.g. using training sequence obtainer 213. Further, the receiver 200 may be configured to receive, on a second pilot subcarrier 221 of the plurality of subcarriers of the receive signal 201, payload data 240 using a first modulation order usable for intercarrier interference cancellation, e.g. using demodulator 223. Furthermore, the receiver 200 is configured to receive, on one or more of the remaining subcarriers 231 of the plurality of subcarriers, payload data 240 using a second modulation order, e.g. using demodulator 233 and wherein the first modulation order is lower than the second modulation order.

The receiver 200 may obtain a received signal 201 which may be processed, such that individual subcarriers (e.g. 211, 221, 231) are obtained, e.g. using optional subcarrier obtainer 202.

The first pilot subcarrier may be filtered with a pulse shaping filter 212, according to a filter used in a transmitter, e.g. transmitter 100. Based on the first pilot subcarrier 211 a training sequence is obtained, which may be included into the first pilot subcarrier by transmitter 100. Based on the reception an intercarrier interference cancellation information 213a may be passed to the subcarrier obtainer 202, which may perform interference cancellation, based on the intercarrier interference cancellation. The intercarrier interference cancellation may also be performed in a separate entity.

The second pilot subcarrier 221 is filtered by pulse shaping filter 222, corresponding to a pulse shaping transmit filter, e.g. filter 114 in transmitter 100. Further, the second pilot subcarrier 221 is demodulated, e.g. using demodulator 223 and may optionally be decoded using channel decoding, e.g. using channel decoder 224. The channel decoding may be based on a channel encoding performed in a transmitter, e.g. transmitter 100 using channel coder 140. Thereby, payload data 240 is obtained from the second pilot subcarrier 221. Based on the demodulated payload data, or the optionally decoded payload data, an intercarrier interference cancellation information 223a can be provided, e.g. to the subcarrier obtainer 202, to remove an influence to neighboring subcarriers, using interference cancellation.

The further subcarrier 231 is filtered, e.g. using filter 232, according to a filtering performed at a transmitter and consequently demodulated, e.g. using demodulator 233. Thereby, payload data 240 can be obtained. The demodulator 233 uses a higher modulation order than the demodulator 223. Optionally, when a channel coding was applied by a transmitter, e.g. transmitter 100, the demodulated data is channel decoded, e.g. using channel decoder 234, to obtain the payload data 240.

Moreover, the receiver 200 can, based on the received pilot subcarriers, perform a frequency synchronization, e.g. in the subcarrier obtainer 202. However, this can also be performed by a separate entity.

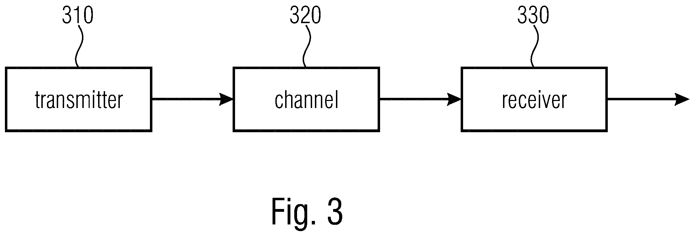

Fig. 3 shows a schematic flow chart of a communication system 300, according to embodiments of the invention. The communication system comprises a transmitter 310 according to one of the embodiments described herein, e.g. 100, configured to transmit a transmit signal into a channel 320. Further, the communication system 300 comprises a receiver 330 according to one of the embodiments described herein, e.g. 200, configured to receive a receive signal based on the transmit signal from the channel

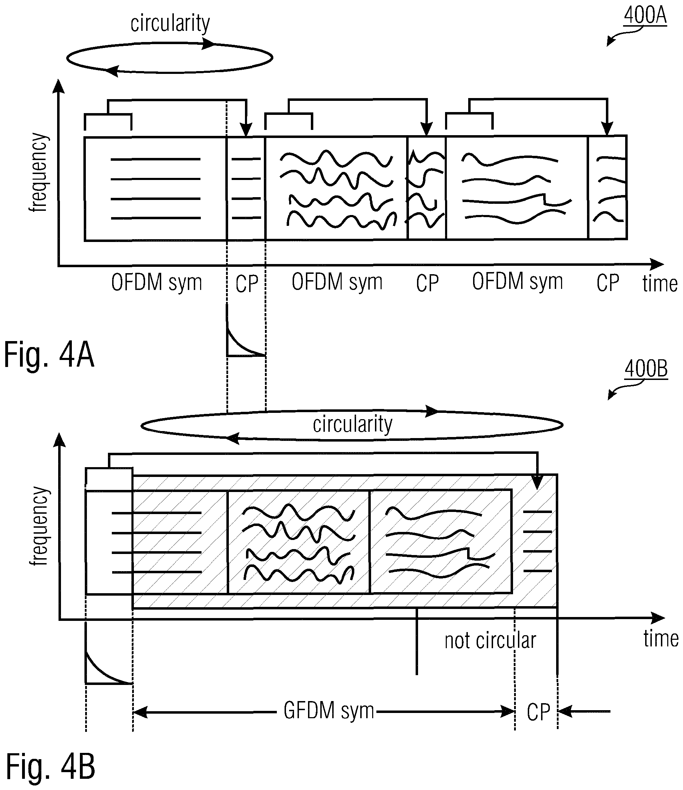

Fig. 4A shows a time-frequency grid 400A of a conventional orthogonal frequency division multiplex (OFDM) concept. The time-frequency grid 400A shows 3 OFDM symbols over 5 frequency subcarriers. Each OFDM block is followed by a cyclic prefix (CP). The CP is a repetition of data from the beginning of the OFDM symbol, therefore, circularity is obtained in time.

Fig. 4B shows a time-frequency grid 400B of a non-orthogonal frequency division multiplex concept, according to embodiments of the invention. The time-frequency grid 400B shows one GFDM symbol followed by a cyclic prefix. The cyclic prefix is a repetition of the data from the beginning of the GFDM Symbol, therefore, circularity is achieved. However, for GFDM the CP is much shorter relative to the symbol length, compared to OFDM.

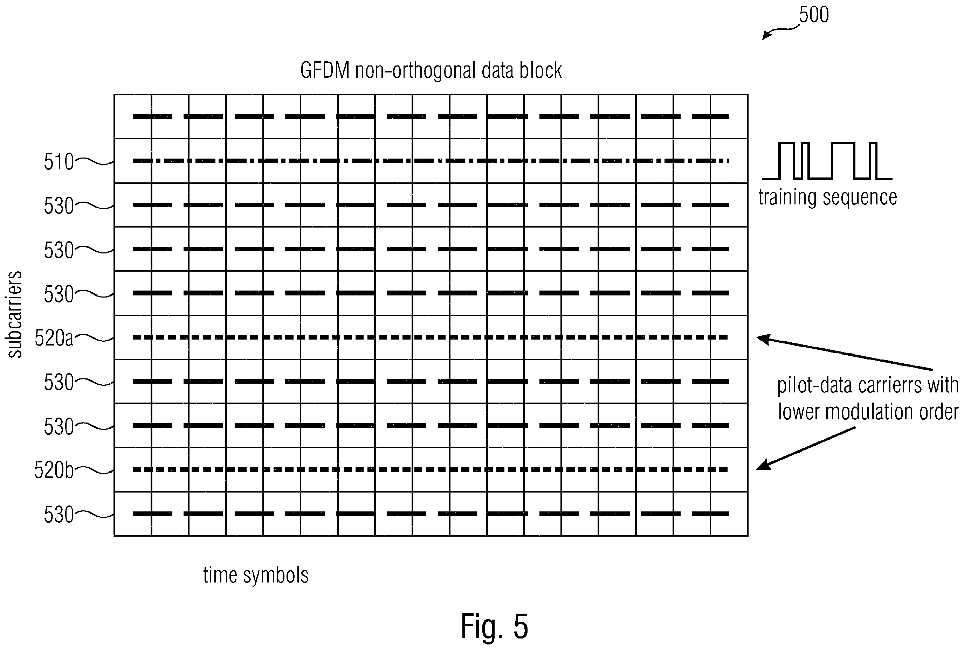

Fig. 5 shows a time-frequency grid 500, according to embodiments of the invention. The time-frequency grid 500 depicts a GFDM non orthogonal data block and provides a first pilot subcarrier 510, carrying a training sequence. Furthermore, the time-frequency grid 500 has a second pilot subcarrier 520a and a third pilot subcarrier 520b which carry payload data instead of training sequences, as would be common in conventional concepts and, thereby, increase spectral efficiency. Moreover, the time-frequency grid 500 shows the remaining subcarriers 530 which carry payload data, modulated with a higher modulation order, than the payload data on the second pilot subcarrier 520a or the third pilot subcarrier 520b.

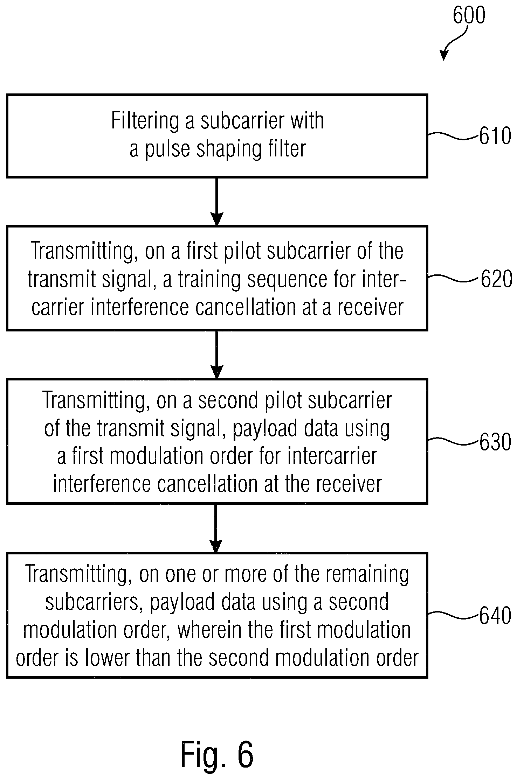

Fig. 6 shows a method 600 for transmitting a transmit signal, comprising a plurality of subcarriers, according to embodiments of the invention. The method 600 comprises filtering 610 a subcarrier with a pulse shaping filter, transmitting 620, on a first pilot subcarrier of the transmit signal, a training sequence for intercarrier interference cancellation at a receiver. Further, the method 600 comprises transmitting 630, on a second pilot subcarrier of the transmit signal, payload data using a first modulation order for intercarrier interference cancellation at the receiver. Moreover, the method 600 comprises transmitting 640, on one or more of the remaining subcarriers, payload data using a second modulation order, wherein the first modulation order is lower than the second modulation order.

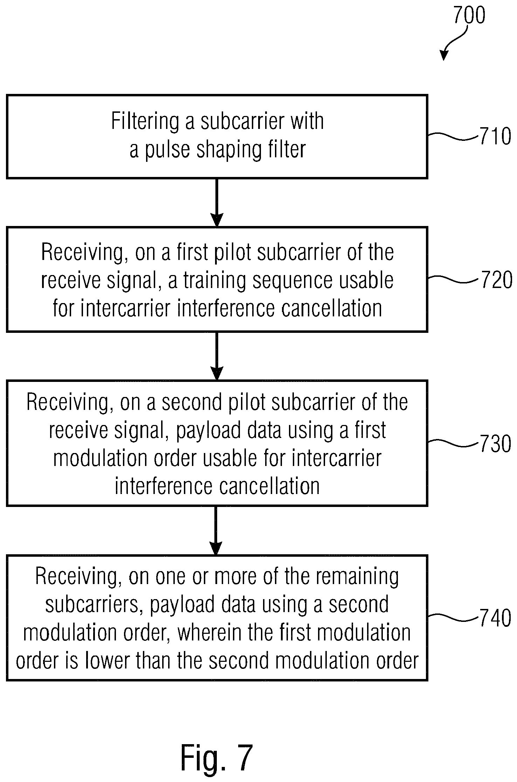

Fig. 7 shows a method 700 for receiving a receive signal comprising a plurality of subcarriers. The method 700 comprises filtering 710 a subcarrier with a pulse shaping filter, receiving 720, on a first pilot subcarrier of the receive signal, a training sequence usable for intercarrier interference cancellation. Further, the method 700 comprises receiving 730, on a second pilot subcarrier of the receive signal, payload data using a first modulation order usable for intercarrier interference cancellation. Moreover, the method 700 comprises receiving 740, on one or more of the remaining subcarriers, payload data using a second modulation order, wherein the first modulation order is lower than the second modulation order.

The methods 600 and 700 can be supplemented by any of the features and functionalities described herein, also with respect to the apparatus.

### Further aspects and conclusion

For ease of synchronization, the conventional solutions involve pilot subcarriers along with data carriers in an OFDM system. A receiver may use these pilots to track the channel to correct the residual phase of the received symbols. Another disadvantage is that these pilot carriers replace the data subcarriers resulting in decreased data rate and low efficiency. In Non-Orthogonal waveforms, including filtered OFDM, the design of the time - frequency data spread requires more robust frequency synchronization and newer techniques than those employed for OFDM. One of the main advantages of these new waveform transmission techniques is spectral efficiency. The legacy pilot carriers may be transmitted "unfiltered" i.e. without non-orthogonal processing. Therefore, they do not fit well into the non-orthogonal frame structure. Care has to be taken that the advantages of non-orthogonal waveforms are not lost due to these unfiltered pilot sequences.

Fig. 5 shows a comparison between OFDM and GFDM (or other Non-Orthogonal) waveform data block construction.

Conventional concepts for OFDM frequency synchronization is by inserting pilot resources. Synchronization schemes using arbitrary (and varying) data but with a given modulation scheme have also been proposed. Closed loop (with the BS and UE) frequency and time synchronization techniques need to be studied. No closed loop sync solution exists so far. Non-Orthogonal waveforms are recent inventions and the research problem of synchronization of these non-OFDM waveforms is also quite new.

Embodiments describe a semi-blind decoding scheme applicable for non-orthogonal waveforms such as FBMC, GFDM, UFMC. Due to the presence of ICI (intercarrier interference) and ISI (intersymbol interference) in a non-orthogonal waveform, there is a need to perform interference cancellation (e.g. using SIC (successive interference cancellation)) before decoding of the data can be attempted. In order to aid the interference cancellation process, the use of a "pilot subcarrier" is recommended which forms an anchor to start the interference cancellation process. As the scope of cancellation process (along sub-carriers) using the pilot sub-carrier is limited, additional sub-carriers dedicated to aid interference cancellation are proposed. These additional sub-carriers carry data with lower modulation order aiding their detection and upon successful detection, play the same role as the pilot subcarrier in the interference cancellation process.

An idea underlying embodiments is the design of pilot subcarriers in a Non-Orthogonal waveform scheme to achieve higher data rates. The idea is that in a non-orthogonal time - frequency data block, the pilot subcarriers may also carry data symbols, making the channel estimation a semi-blind process. The main idea is that the data transmitted over the pilot subcarriers (104; 221; 520a; 520b) are modulated with a modulation order less than that of the data subcarriers (106; 231; 530). For example, if the data subcarriers of GFDM/FBMC/UFMC are using 256-QAM, then the modulation order of the pilot subcarriers carrying data information can be Binary Phase Shift Keying (BPSK) or Quadrature Phase Shift Keying (QPSK).

In the following an embodiment is described in the form of a list
1. An non-orthogonal transmitter has a set of subcarriers. Out of that set, there is a set of pilot subcarriers. At least one of the pilot subcarriers transmits a training sequence known at the receiver.
2. Some of the pilot subcarriers are transmitting data with a lower modulation order. The data subcarriers are transmitting data with a higher modulation order.
3. A GFDM receiver starts the process of initializing the receiver from that received training sequence and generates a first error estimation information.
4. An idea is then to use the first error estimation information to recover data in the lower modulation pilot subcarriers and generate a second error estimation information.
5. The second error estimation is then used to recover the data in the higher order modulated data subcarriers.

To improve the overall operation of the synchronization for non-orthogonal waveforms, the lower order modulated pilot-data subcarriers can have known data, or signaling information, or known training sequence again. The lower order modulation data increases the robustness of the multistage frequency synchronization method in GFDM.

As shown in Fig. 6, most of the subcarriers carry useful data at higher order modulation. At least one is a pilot carrier with a known training sequence (510). Instead of similar training sequences, the other two pilot subcarriers (520a and 520b) contain useful data, but modulated at lower modulation order, increasing the robustness of their detection and estimation. A GFDM data block may comprise multiple subcarriers and several OFDM time samples. These are then pulse filtered and digitally up-converted. The detailed signal processing required for GFDM or FBMC transmission is found in literature referred.

Fig. 5 shows non-orthogonal data block with multi stage pilot insertion.

A non-orthogonal receiver (for example GFDM receiver) may have a time synchronization block that detects the packet and synchronizes the symbol timing. An initial carrier frequency and estimation may be performed by the frequency synchronization block.

Higher order modulation constellations have lower error limits, as the distance between the constellations points is low. Hence the pilots with data modulated with BPSK are easier to detect, and also improve the data rate as they are not wasted to carry only training sequence.

The training sequence may be a pseudo-random sequence of +/-1 which is known at the receiver. The initial training sequence is used for initialization of the receiver and to generate the first error estimation vector. In contrast to conventional concepts in LTE/OFDM systems, not all the pilot carriers are known at both the transmitter and the receiver. In an embodiment, at least one pilot is a training sequence, while the rest are GFDM data modulated with lower order modulation and coding schemes (to increase the robustness of the error estimates). MMSE or MLE may be used to estimate the constellation points on the pilot subcarriers. The use of transmitting data (with lower modulation) over the pilots in the GFDM/FBMC system increases the data rate of the system. The proposed idea increases the spectral efficiency of pilot based GFDM/FBMC systems, and also provides a secondary data carriers over pilot carriers which could be used for other purposes.

Lastly, although the proposed scheme is effective in cancelling the ICI, it is ineffective in combating ISI which is also an essential element of non-orthogonal transforms. Coexistence of the proposed scheme with a scheme to combat ISI in non-orthogonal waveforms may also be done.

Therefore, it is suggested to extend the scheme to include a solution for ISI cancellation e.g. using a sparse grid in time-frequency instead of dedicated sub-carriers or using dedicated pilot symbols along with dedicated pilot subcarriers. As mentioned earlier, the choice is primarily driven by performance requirements.

In the following some benefits of embodiments are listed:
- Multistage error estimation vector generation is more robust.
- Having lower order modulation data over pilots provides a secondary data path that increases the data rate of the system.
- This method increases the spectral efficiency of the pilot based GFDM/FBMC system.
- The SNR of the pilots are higher as they have lower order modulation data like BPSK compared to 256 QAM in normal data subcarriers

If a non-orthogonal waveform based system needs to combat fading effects, additional pilot subcarriers may be necessary weakening the claim to replace pilot subcarriers with data subcarriers with lower modulation order. A decision may be made only depending on the performance requirements. While this report compares the scheme to a state-of-the-art OFDM transmission scheme (LTE assumed), the role of the pilot symbols in the two schemes is entirely different. The proposed method uses pilot symbols primarily for interference cancellation, while the OFDM scheme uses pilot symbols primarily for (multi-antenna) channel estimation. Therefore, the requirements driving the placement and performance of pilot symbols are different.

Further embodiments describe Multistage frequency synchronization for GFDM. Embodiments apply to Wireless Communication, Digital or Optical communications involving modulated signals/waveforms.

Embodiments can be described as "pilot aided ICI cancellation in non-orthogonal waveforms" which uses the pilot symbols to initialize the ICI cancellation process compared to the existing techniques which use the highest SNR sub-carrier to initialize the ICI cancellation process.

In the following embodiments are provided in a list:
1. Embodiments introduce new pilot symbols. However, this adds to the already dense grid of pilot symbols, e.g in LTE. The lower order modulated pilot symbols might not compensate for the additional number of pilots.
2. In embodiments, ISI cancellation in non-orthogonal waveforms can also benefit from pilot symbols. Therefore, it might be interesting to consider "pilot aided ICI and ISI cancellation in non-orthogonal waveforms."
3. Embodiments describe a grid structure rather than a single allocated subcarrier, which might be beneficial in reducing the overhead of number of pilot resources, and might allow flexibility in the placement of pilot resources as they are not constrained to a single subcarrier.
4. The scheme should be generalized so that future standards deciding to employ non-orthogonal transforms are able to perform ISI and ICI cancellation using the proposed scheme with minimal chances of workarounds.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The apparatus described herein, or any components of the apparatus described herein, may be implemented at least partially in hardware and/or in software.

The methods described herein may be performed using a hardware apparatus, or using a computer, or using a combination of a hardware apparatus and a computer.

The methods described herein, or any components of the apparatus described herein, may be performed at least partially by hardware and/or by software.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. A transmitter (100;310) configured to transmit a transmit signal (190),
wherein the transmit signal comprises a plurality of subcarriers (102; 104;106),
wherein the transmitter is configured to filter a subcarrier of the plurality of subcarriers with a pulse shaping filter (112; 114; 116),
wherein the transmitter is configured to transmit, on a first pilot subcarrier (102) of the plurality of subcarriers of the transmit signal, a training sequence (102a) for an intercarrier interference cancellation at a receiver,
wherein the transmitter is configured to transmit, on a second pilot subcarrier (104) of the plurality of subcarriers of the transmit signal, payload data (110) using a first modulation order for an intercarrier interference cancellation at the receiver,
wherein the transmitter is configured to transmit, on one or more of the remaining subcarriers (106) of the plurality of subcarriers, payload data (110) using a second modulation order, and
wherein the first modulation order is lower than the second modulation order.

2. A transmitter according to claim 1, wherein the first pilot subcarrier remains unfiltered by the pulse shaping filter.

3. A transmitter according to claim 1 or 2, wherein the transmitter is configured to modulate the payload data onto the second pilot subcarrier using a modulation order smaller than 5.

4. A transmitter according to one of the claims 1 to 3, wherein the transmitter is configured to modulate the payload data onto the second pilot subcarrier using a Binary Phase Shift Keying (BPSK), a Quadrature Phase Shift Keying (QPSK) or a 4-Quadrature Amplitude Modulation (4-QAM).

5. A transmitter according to one of the claims 1 to 4, wherein the transmitter is configured to modulate the payload data onto the one or more remaining subcarriers using a modulation order greater than 5.

6. A transmitter according to one of the claims 1 to 5, wherein the transmitter is configured to modulate the payload data onto the one or more remaining subcarriers using a 256-Quadrature Amplitude Modulation (256-QAM).

7. A transmitter according to one of the claims 1 to 6, wherein the transmitter is configured to transmit the training sequence on the first pilot subcarrier, wherein the training sequence is based on a binary sequence known at the receiver.

8. A transmitter according to one of the claims 1 to 7, wherein the transmitter is configured to transmit the training sequence on the first pilot subcarrier, the training sequence usable for a frequency synchronization of the receiver.

9. A transmitter according to one of the claims 1 to 8, wherein the transmitter is configured to transmit payload data over the second pilot subcarrier, when a channel information is above a certain threshold, or
wherein the transmitter is configured to transmit information, known at the receiver, on the second pilot subcarrier, when the channel information is below a certain threshold, wherein the known information is usable by the receiver for at least one of a frequency synchronization and/or a channel estimation and /or a intercarrier interference cancellation.

10. A transmitter according to one of the claims 1 to 9, wherein the transmitter is configured to transmit payload data on the second pilot subcarrier, the payload data usable for a frequency synchronization of the receiver.

11. A transmitter according to one of the claims 1 to 10, wherein the transmitter is configured to encode the payload data transmitted on the second pilot subcarrier and/or on the one or more remaining subcarriers, using channel coding (140).

12. A transmitter according to claim 11, wherein the transmitter is configured, for using the channel coding, to encode the payload data, such that a redundancy is introduced, in order to allow for reception of the payload data over a noisy or lossy channel.

13. A transmitter according to one of the claims 1 to 12, wherein the transmitter is configured to use the first pilot subcarrier to transmit a training sequence in a first time frame, and wherein the transmitter is configured to use the second pilot subcarrier to transmit a training sequence in a second time frame, wherein the first time frame and the second time frame are different.

14. A transmitter according to one of the claims 1 to 13,
wherein the pilot subcarriers are ordered in a time-frequency grid (500) of the transmit signal,
wherein the transmitter is configured to sparsely populate the pilot subcarriers of the transmit signal,
such that individual transmit symbols on a pilot subcarrier are sufficiently distanced in time such that the receiver may receive the symbols of the pilot subcarrier substantially intersymbol interference free, and/or
such that the transmitter uses individual pilot subcarriers of the transmit signal sufficiently distanced in frequency such that the receiver may receive the individual pilot subcarriers substantially intercarrier interference free.

15. A receiver (200) configured to receive a receive signal (201) from a channel,
wherein the receive signal comprises a plurality of subcarriers (211;221; 231),
wherein the receiver is configured to filter a subcarrier of the plurality of subcarriers with a pulse shaping filter (212; 222; 232),
wherein the receiver is configured to receive, on a first pilot subcarrier of the plurality of subcarriers of the receive signal, a training sequence usable for intercarrier interference cancellation,
wherein the receiver is configured to receive, on a second pilot subcarrier of the plurality of subcarriers of the receive signal, payload data (240) using a first modulation order usable for intercarrier interference cancellation,
wherein the receiver is configured to receive, on one or more of the remaining subcarriers of the plurality of subcarriers, payload data (240) using a second modulation order, and
wherein the first modulation order is lower than the second modulation order.

16. A Receiver according to claim 15, wherein the receiver is configured to obtain the payload data modulated on the second pilot subcarrier,
wherein the receiver is configured to determine an interference estimate onto adjacent subcarriers based on the payload data obtained from the second pilot subcarrier, and
wherein the receiver is configured to remove the interference onto adjacent subcarriers based on the obtained interference.

17. A receiver according to claim 15 or 16, wherein the first pilot subcarrier remains unfiltered by the pulse shaping filter.

18. A receiver according to one of the claims 15 to 17, wherein the receiver is configured to obtain the training sequence from the first pilot subcarrier, wherein the training sequence is a binary sequence known at the receiver, and wherein the receiver is configured to use the training sequence for at least one of a frequency synchronization (202), a channel estimation, and an interference cancellation (202).

19. A receiver according to one of the claims 15 to 18, wherein the receiver is configured to obtain the payload data from the second pilot subcarrier, wherein the receiver is configured to use the payload data for at least one of a frequency synchronization (202), a channel estimation (202) and an intercarrier interference cancellation (202).

20. A receiver according to one of the claims 15 to 19, wherein the receiver is configured to obtain known information from the second pilot subcarrier, wherein the receiver is configured to use the known information for at least one of a frequency synchronization (202), a channel estimation (202) and an intercarrier interference cancellation (202).

21. A receiver according to one of the claims 15 to 20, wherein the receiver is configured to decode the payload data, obtained from the second pilot subcarrier and/or from the one or more remaining subcarriers, using channel coding (224, 234).

22. A receiver according to one of the claims 15 to 21, wherein the receiver is configured to estimate a first error information based on a reception of the training sequence from the first pilot subcarrier,
wherein the receiver is configured to estimate a second error information based on the second pilot subcarrier using the first error information, and
wherein the receiver is configured to estimate the payload data at the receiver using the first error information and/or the second error information.

23. A communication system (300) comprising
a transmitter (310) according to one of the claims 1 to 14, configured to transmit a transmit signal into a channel (320), and
a receiver (330) according to one of the claims 15 to 22, configured to receive a receive signal based on the transmit signal from the channel.

24. Method (600) for transmitting a transmit signal comprising a plurality of subcarriers, wherein the method comprises:
Filtering (610) a subcarrier with a pulse shaping filter,
Transmitting (620), on a first pilot subcarrier of the transmit signal, a training sequence for intercarrier interference cancellation at a receiver,
Transmitting (630), on a second pilot subcarrier of the transmit signal, payload data using a first modulation order for intercarrier interference cancellation at the receiver,
Transmitting (640), on one or more of the remaining subcarriers, payload data using a second modulation order, and
wherein the first modulation order is lower than the second modulation order.

25. Method (700) for receiving a receive signal comprising a plurality of subcarriers, wherein the method comprises:
Filtering (710) a subcarrier with a pulse shaping filter,
Receiving (720), on a first pilot subcarrier of the receive signal, a training sequence usable for intercarrier interference cancellation,
Receiving (730), on a second pilot subcarrier of the receive signal, payload data using a first modulation order usable for intercarrier interference cancellation,
Receiving (740), on one or more of the remaining subcarriers, payload data using a second modulation order, and
wherein the first modulation order is lower than the second modulation order.

26. Computer program with a program code for performing one of the methods 24 or 25, when the computer program runs on a computer or a microcontroller.
